## Europäisches Patentamt
## European Patent Office
## Office européen des brevets

(19)

(11) Numéro de publication: **0 057 113 B1**

(12) **FASCICULE DE BREVET EUROPEEN**

(45) Date de publication du fascicule du brevet:
**27.11.85**

(51) Int. Cl.⁴: **B 60 K 5/04,** F 16 H 57/02

(21) Numéro de dépôt: **82400014.5**

(22) Date de dépôt: **07.01.82**

(54) Groupe de transmission pour véhicule automobile.

(30) Priorité: **09.01.81 FR 8100587**

(43) Date de publication de la demande:
**04.08.82 Bulletin 82/31**

(45) Mention de la délivrance du brevet:
**27.11.85 Bulletin 85/48**

(84) Etats contractants désignés:
**DE GB IT**

(56) Documents cités:
**DE - A - 2 256 150**
**DE - A - 2 707 911**
**FR - A - 1 411 541**
**FR - A - 2 378 647**
**FR - A - 2 403 227**
**GB - A - 2 035 930**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Lachaize, Henri Gabriel, 13, Avenue Paul Langevin, F-92230 Fontenay-Aux-Roses (FR)**
Inventeur: **Schiler, Daniel, 16, Allée des Capucines Cressely, F-78470 St Remy-Les-Chevreuse (FR)**

(74) Mandataire: **Boivin, Claude, 9, rue Edouard-Charton, F-78000 Versailles (FR)**

ACTORUM AG

# Description

La présente invention concerne les groupes de transmission pour véhicules automobiles comprenant un embrayage, une boîte de vitesse comportant un arbre primaire relié à l'embrayage et un arbre secondaire portant un pignon de renvoi coopérant avec une couronne d'un différentiel comportant deux arbres de transmission de sortie, et des carters enfermant ces dits éléments.

Souvent, ces groupes de transmission comportent deux carters, à savoir un premier carter qui comporte un logement pour l'embrayage et un logement pour le différentiel et dans lequel sont réalisés les alésages pour les arbres primaire et secondaire de la boîte de vitesse et pour l'un des arbres de transmission de sortie du différentiel, et un second carter qui forme logement pour la boîte de vitesses et dans lequel sont réalisés des alésages pour lesdits arbres primaire et secondaire, ainsi que pour le second arbre de transmission de sortie du différentiel. Un tel groupe de transmission est connu par exemple par DE-A 2 256 150.

Généralement, l'usinage des alésages pour les portées des arbres primaire et secondaire de la boîte de vitesses se fait alors que les deux carters sont assemblés l'un à l'autre, afin d'assurer un bon parallélisme des axes de ces alésages. Du fait d'un tel procédé d'usinage simultané des alésages pour les arbres primaire et secondaire de la boîte de vitesses, prévus dans le premier carter et le second carter, ce dernier comporte une extrémité ouverte qu'il est nécessaire de fermer par un couvercle rapporté.

De plus, il est nécessaire de faire des repères sur les carters appareillés, puis de les désassembler pour permettre le montage de la pignonnerie, et enfin de les réassembler. Il s'ensuit une manipulation importante à laquelle il doit être procédé avec soin.

Il est connu par ailleurs, dans d'autres solutions, de monter le pitnon de renvoi en porte-à-faux sur l'arbre secondaire, c'est-à-dire que l'alésage prévu pour cet arbre dans le premier carter est disposé entre le pignon de renvoi et les pignons d'entraînement. Cette disposition assure une meilleure transmission des efforts et permet d'obtenir une isolation relative des huiles des carters et, par suite, moins de barbotage de la pignonnerie et un meilleur rendement. Mais, pour permettre le démoulage du premier carter, il est nécessaire de prévoir un troisième carter pour fermer le différentiel. Depuis une époque très récente, on sait réaliser un usinage séparé des portées des carters, ce qui présente l'avantage de supprimer les manipulations mentionnées précédemment et la nécessité de prévoir un couvercle rapporté à l'extrémité du carter de la boîte de vitesses. Ce carter comporte ainsi un logement pour la boîte de vitesses muni d'une extrémité fermée dans laquelle sont montés des paliers pour les arbres primaire et secondaire de cette boîte, et une partie approximativement plane destinée à former couvercle pour le logement du différentiel et dans laquelle est disposé un palier pour le second arbre de transmission de sortie du différentiel. Mais, dans ces groupes de transmission, le pignon de renvoi n'est pas monté en porte-à-faux sur l'arbre secondaire qui est, au contraire, supporté à ses deux extrémités.

La présente invention a pour objet un groupe de transmission de véhicule automobile du type ci-dessus dans lequel l'usinage des alésages des carters se fait carters séparés, mais dans lequel le pignon de renvoi est monté en porte-à-faux sur l'arbre secondaire.

Le groupe de transmission selon l'invention est caractérisé en ce que le premier carter présente un logement dans lequel est engagée l'extrémité de l'arbre secondaire portant le pignon de renvoi et dans les parois duquel sont réalisées d'une part une ouverture latérale pour le passage de la couronne coopérant avec le pignon de renvoi et d'autre part, à l'extrémité ouverte du logement, une portée de palier pour l'arbre secondaire de la boîte de vitesses, de sorte que le pignon de renvoi est monté en porte-à-faux sur l'arbre secondaire.

On a décrit ci-après, à titre d'exemple non limitatif, un mode de réalisation d'un groupe de transmission selon l'invention avec référence au dessin annexé dans lequel:

La Fig. 1 représente le groupe de transmission partiellement en coupe axiale et partiellement en élévation;

La Fig. 2 est une vue en élévation du carter enfermant l'embrayage, le différentiel et le pignon de renvoi,

La Fig. 3 montre comment le carter de la boîte de vitesse peut être modifié, dans le cas d'une boîte avec un rapport disposé à l'extérieur du carter principal de boîte.

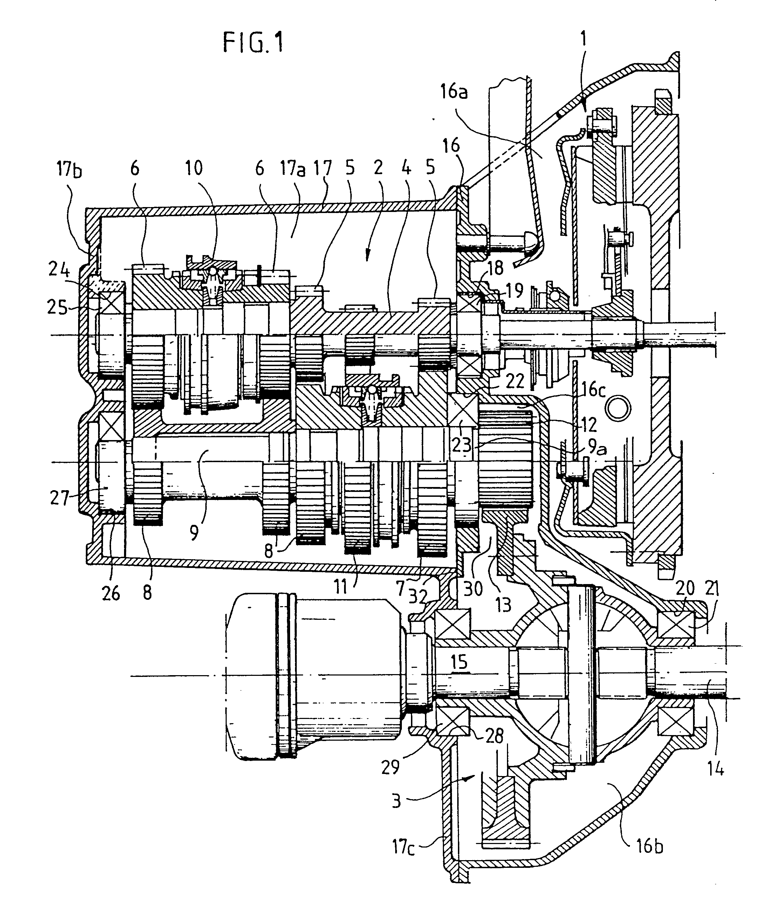

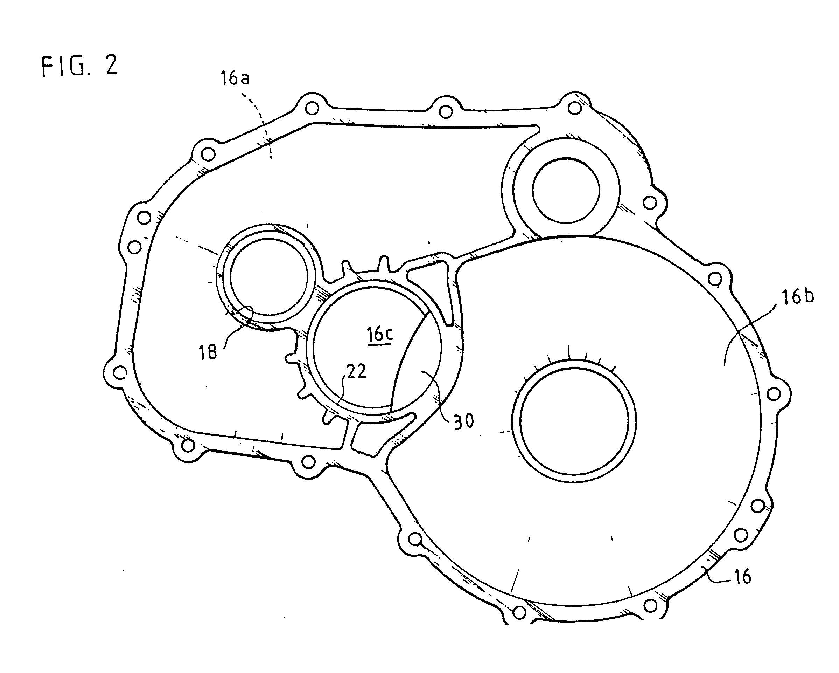

Tel qu'il est représenté aux Figures 1 et 2, le groupe de transmission selon l'invention comprend un embrayage 1, une boîte de vitesses 2 et un différentiel 3.

L'embrayage 1 relie le vilebrequin du moteur (non représenté) à l'arbre primaire 4 de la boîte de vitesses 2, qui est ici à quatre rapports. L'arbre primaire 4 porte deux pignons 5 calés en rotation et deux pignons 6, montés fous en rotation, ces quatre pignons étant en prise respectivement avec deux pignons 7 montés fous en rotation et deux pignons 8 calés en rotation sur l'arbre secondaire 9 de la boîte de vitesses. L'arbre secondaire 9 peut être entraîné en rotation suivant un rapport de transmission qui peut être modifié, en agissant par l'intermédiaire d'une tringlerie (non représentée) sur des synchroniseurs 10 et 11 qui peuvent être déplacés axialement de manière à lier en rotation l'un des pignons 6 ou 7, montés fous, avec son arbre correspondant.

L'extrémité 9a de l'arbre secondaire 9 porte un pignon de renvoi 12 qui coopère avec la couronne 13 du différentiel 3, lequel est relié par l'intermédiaire de deux arbres de transmission 14 et 15 aux roues motrices (non représentées).

2

Tous ces organes sont contenus dans deux carters:

– un premier carter 16, présentant un logement 16a pour l'embrayage 1, un logement 16b pour le différentiel 3 et un logement 16c pour l'extrémité 9a de l'arbre secondaire 9, portant le pignon de renvoi 12,
– un second carter 17 présentant un logement 17a pour la boîte de vitesses; ce carter est fermé à son extrémité 17b et comporte à son autre extrémité, une partie plane 17c destinée à former couvercle pour le logement 16b du différentiel.

Dans le carter 16 sont réalisés: un alésage 18 pour monter le roulement 19 supportant l'arbre primaire 4 de boîte de vitesses, un alésage 20 pour monter le roulement 21 supportant l'arbre de transmission 14 de sortie de différentiel et un alésage 22 pour monter le roulement 23 supportant l'arbre secondaire 9 de boîte de vitesses, cet alésage étant prévu à l'extrémité ouverte du logement cylindrique 16c.
Dans l'extrémité fermée 17b du carter 17 de boîte de vitesses sont réalisés: un alésage 24 pour monter le roulement 25 supportant l'arbre primaire 4 et un alésage 26 pour monter le roulement 27, supportant l'arbre secondaire 9. Dans la partie 17c du carter 17 est réalisé un alésage 28 pour le roulement 29 supportant l'arbre de transmission 15 de sortie de différentiel.

Il apparait que l'extrémité 17b du carter 17 étant fermée, l'usinage est nécessairement fait carters séparés.
Par ailleurs, dans la paroi du logement cylindrique 16c est ménagée une ouverture latérale 30, de manière à permettre le passage de la couronne 13 de différentiel. Le pignon de renvoi 12 de l'arbre secondaire 9, qui est en prise avec la couronne 13 peut ainsi être monté en porte-à-faux.
Les carters 16 et 17 sont donc faciles à fabriquer, à démouler, à usiner et à assembler, une fois que la pignonnerie est montée à l'intérieur.

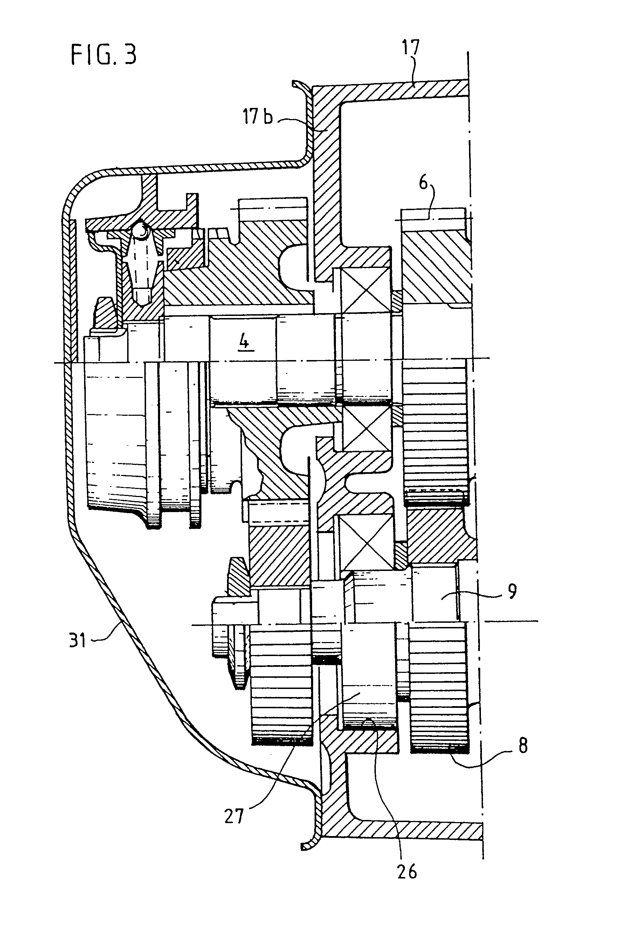

De plus, un carter 17, prévu par exemple pour une boîte de vitesses à quatre rapports, peut être aisément transformé en carter de boîte de vitesses à cinq rapports. En effet, il suffit d'ouvrir l'extrémité fermée 17b du carter 17, de manière à permettre le passage des arbres primaire 4 et secondaire 9, sur lesquels on monte la pignonnerie adéquate, le tout étant coiffé par un couvercle 31 vissé sur l'extrémité 17b (Fig. 3).
Il va de soi que la présente invention ne doit pas être considérée comme limitée au mode de réalisation décrit et représenté.
Dans le cas où, comme représenté sur la Figure 1, le carter 16 ne présente pas d'extension destinée à obturer la communication entre d'une part les logements 16b de différentiel et 16c de pignon de renvoi et d'autre part le logement 17a de boîte de vitesses, il peut être prévu une pièce en tôle 32 destinée à remplir cette fonction. On assure alors une bonne isolation des huiles des carters de différentiel et de boîte de vitesses, tout en obtenant un gain de poids, de matière et, par suite, de prix.

**Revendications**

1. Groupe de transmission pour véhicules automobiles comprenant un embrayage (1), une boîte de vitesses (2) comportant un arbre primaire (4) relié à l'embrayage et un arbre secondaire (9) portant un pignon de renvoi (12) coopérant avec une couronne (13) d'un différentiel (3) comportant deux arbres de transmission de sortie (14 et 15), un premier carter (16) qui comporte un logement (16a) pour l'embrayage (1) et un logement (16b) pour le différentiel (3) et dans lequel sont montés des paliers pour les arbres primaires (4) et secondaire (9) de la boîte de vitesses (2) et pour l'un des arbres de transmission de sortie du différentiel, et un second carter (17) comportant un logement (17a) pour la boîte de vitesses (2) muni d'une extrémité fermée (17b) dans laquelle sont montés des paliers (25 et 27) pour les arbres primaire (4) et secondaire (9) de cette boîte, et une partie approximativement plane (17c) destinée à former couvercle pour le logement (16b) du différentiel (3) et dans laquelle est disposé un palier (29) pour le second arbre de transmission de sortie (15) du différentiel (3), caractérisé en ce que le premier carter (16) présente un logement (16c) dans lequel est engagée l'extrémité (9a) de l'arbre secondaire (9) portant le pignon de renvoi (12) et dans la paroi duquel sont réalisées d'une part une ouverture latérale (30) pour le passage de la couronne coopérant avec le pignon de renvoi (12) et d'autre part, à l'extrémité ouverte du logement, une portée de palier (22) pour l'arbre secondaire (9) de la boîte de vitesses (2), de sorte que le pignon de renvoi (12) est monté en porte-à-faux sur l'arbre secondaire.
2. Groupe de transmission selon la revendication 1, caractérisé en ce qu'est prévu une pièce (32), par exemple en tôle, destinée à obturer la communication entre d'une part les logements (16b) du différentiel et (16c) du pignon de renvoi et, d'autre part le logement (17a) de la boîte de vitesses.

**Claims**

1. Transmission unit for motor vehicles comprising a clutch (1), a gearbox (2) comprising a primary shaft (4) connected to the clutch and a secondary shaft (9) having a counter-gear (12) cooperating with a ring gear (13) of a differential (3) having two output transmission shafts (14 and 15), a first casing (16) which comprises a housing (16a) for the clutch (1) and a housing (16b) for the differential (3) and in which are mounted bearings for the primary (4) and secondary (9) shafts of the gearbox (2) and for one of the output transmission shafts of the differential, and the second casing (17) comprising a housing (17a) for the gearbox (2) having a closed end (17) in which are mounted bearings (25 and 27) for the primary (4) and secondary (9) shafts of this gearbox, and an approximately flat part (17c) intended to form a cover for the housing (16b) of the differential (3) and in which is disposed a bearing (29) for the second output transmission shaft (15) of the differential (3), characterized in that the first casing (16) has a housing (16c) in which is engaged the end (9a) of the secondary shaft (9) supporting the counter-gear (12) and in the wall of which are formed, on the one hand, a side opening (30) for passing therethrough the ring gear cooperating with the counter-gear (12) and, on the other hand, at the open end of the housing, a journal bearing (22) for the secondary shaft (9) of the gearbox (2), so that the counter-gear (12) is mounted over hanging on the secondary shaft.

2. Transmission unit according to claim 1, characterized in that a part (32) is provided, made for example from metal plate, for closing off the communication between, on the one hand, the housings (16b) for the differential and, (16c) for the counter-pinion and, on the other hand, the housing (17a) for the gearbox.

## Patentansprüche

1. Getriebeaggregat für Kraftfahrzeuge, das eine Kupplung (1), ein Getriebegehäuse (2), das eine mit der Kupplung verbundene Achswelle (4) und eine Hauptwelle (9) umfasst, wobei letztere ein Zahnrad (12) trägt, das in einen Zahnradkranz (13) eines zwei wegführende Transmissionswellen (14 und 15) enthaltenden Differentials eingreift, ein erstes Gehäuse (16), das einen Raum (16a) zur Aufnahme der Kupplung (1) und einen Raum (16b) zur Aufnahme des Differentials (3) vorsieht, in dem Lager sowie für die Achswelle (4) und Hauptwelle (9) des Getriebegehäuses (2) als auch für eine der wegführenden Transmissionswellen des Differentials angebracht sind, und ein zweites Gehäuse (17), das einen Raum (17a) für das Getriebegehäuse (2) umschliesst, wobei dieses mit einem geschlossenen Ende (17b), in dem Lager (25) und (27) für die Achswelle (4) und Hauptwelle (9) des Getriebegehäuses eingebaut sind, versehen ist und weiterhin versehen ist mit einem in etwa planen Teil (17c), das als Abdeckung für den Raum (16b) des Differentials (3) vorgesehen ist, und in dem ein Lager (29) für die zweite wegführende Transmissionswelle (15) des Differentials (3) vorgesehen ist, umfasst, dadurch gekennzeichnet, dass das erste Gehäuse (16) einen Raum (16c) aufweist, in welchem das Ende (9a) der das Zahnrad (12) tragenden Hauptwelle eingeschlossen und in dessen Seitenwand zum einen eine seitliche Öffnung (30) zur Durchführung des mit dem Zahnrad (12) zusammenwirkenden Zahnradkranzes und zum anderen eine Bohrung (22) für die Hauptwelle (9) des Getriebegehäuses (2) am offenen Ende dieses Raumes verwirklicht sind, in der Art, dass das Zahnrad (12) über der Hauptwelle vorstehend angebracht ist.

2. Getriebeaggregat gemäss Anspruch 1, dadurch gekennzeichnet, dass ein Teil (32), z.B. aus Blech, vorgesehen ist, das zur Herstellung einer Verbindung zwischen den Räumen (16b) zur Aufnahme des Differentials und (16c) zur Aufnahme des Zahnrades einerseits und den Raum (17a) zur Aufnahme des Getriebegehäuses andererseits bestimmt ist.

FIG.1

FIG. 2

16b

16

30

16c

22

18

16a

FIG. 3